# EUROPEAN PATENT SPECIFICATION

(11) **EP 2 728 658 B1**
(45) Date of publication and mention of the grant of the patent: **27.09.2017**
(21) Application number: 12803685.2
(22) Date of filing: 07.06.2012
(51) Int. Cl.: H01M 10/02, H01M 2/36, H01M 2/10, H01B 3/30, B60L 11/18, H01M 10/04, H01M 2/16, H01M 10/052

(54) **SECONDARY BATTERY HAVING SUPERIOR PRODUCTIVITY AND SAFETY**
SEKUNDÄRBATTERIE MIT HERVORRAGENDER PRODUKTIVITÄT UND SICHERHEIT
BATTERIE SECONDAIRE À PRODUCTIVITÉ ET SÉCURITÉ SUPÉRIEURES

(30) Priority: 30.06.2011 KR 20110064287
(43) Date of publication of application: 07.05.2014
(73) Proprietor: LG Chem, Ltd., Youngdungpo-gu Seoul 150-721 (KR)
(72) Inventor: KIM, Do Gyun, Cheongwon-gun Chungcheongbuk-do 363-884 (KR); KIM, Dong-Myung, Daejeon 305-759 (KR); NAM, Sang Bong, Cheonan-si Chungcheongnam-do 330-913 (KR); LEE, Dong Sub, Icheon-si Gyeonggi-do 467-110 (KR); MOON, Jun Ho, Cheongwon-gun Chungcheongbuk-do 363-884 (KR); JUNG, Sang Sok, Cheongwon-gun Chungcheongbuk-do 363-884 (KR)
(74) Representative: Cabinet Plasseraud
(86) International application number: PCT/KR2012/004454
(87) International publication number: WO 2013/002497

(56) References cited:
- JP-A- H10 284 046
- JP-A- 2002 231 314
- JP-A- 2009 140 676
- JP-A- 2009 301 892
- KR-A- 970 018 818
- KR-A- 20070 071 242
- US-A1- 2008 107 957
- US-A1- 2010 055 555
- US-A1- 2011 086 265

## Description

### [Technical Field]

The present invention relates to a secondary battery with superior productivity and safety. More specifically, the present invention relates to a secondary battery having a structure in which a jelly-roll having a cathode/separator/anode structure is mounted in a cylindrical battery case, wherein a plate-shaped insulator mounted on the top of the jelly-roll includes a perforated inlet enabling gas discharge and penetration of electrode terminals and a plurality of fine pores that allow permeation of an electrolyte solution, but do not allow permeation of foreign materials having a size of 100 µm or higher.

### [Background Art]

The development of techniques associated with mobile devices and increase in demand therefor have brought about rapid increase in the demand for secondary batteries as energy sources. Among secondary batteries, lithium secondary batteries with high energy density, high driving voltage and superior storage and lifespan characteristics are widely used as energy sources of various electric products including mobile devices. Prior art document US2010/0055555 relates to a nonaqueous battery with an insulating plate with a defined maximum pore size range. Also documents US2011/086265, JPH10284046, US2008/017957 and KR20070071242 relate to a secondary battery provided with an insulating member. Depending on the shape of the battery case, the secondary battery may be divided into cylindrical and rectangular batteries mounted in cylindrical and rectangular metal cans, respectively, and a pouch-shaped battery mounted in a pouch-shaped case made of an aluminum laminate sheet. Of these, the cylindrical battery has advantages of relatively high capacity and superior structural stability. The electrode assembly mounted in the battery case is an electricity-generating device enabling charge and discharge that has a cathode/separator/anode laminate structure and is divided into a jelly-roll type in which an electrode assembly including a separator interposed between a cathode and an anode, each made of an active material-coated long sheet, is rolled, a stack-type in which a plurality of cathodes and a plurality of anodes are laminated in this order such that a separator is interposed between the cathode and the anode and a stack/folding type which is a combination of a jelly-roll type and a stack type. Of these, the jelly-roll-type electrode assembly has advantages of easy manufacture and high energy density per weight.

In this regard, a conventional cylindrical secondary battery is shown in FIG. 1. An insulator generally used for the cylindrical secondary battery is shown in plan views in FIGS. 2 and 3.

Referring to the drawings, a cylindrical secondary battery 100 is manufactured by mounting a jelly-roll type (rolled-type) electrode assembly 120 in a battery case 130, injecting an electrolytic solution into the battery case 130 and coupling a cap assembly 140 provided with an electrode terminal (for example, a cathode terminal; not shown) to the open top of the case 130.

The electrode assembly 120 is obtained by inserting a separator 123 between a cathode 121 and an anode 122 and rolling the resulting structure into a round shape. A cylindrical center pin 150 is inserted into the core (center) of the jelly-roll. The center pin 150 is generally made of a metal to impart a predetermined strength and has a hollow-shaped cylindrical structure of a roundly bent plate material. Such a center pin 150 sets and supports the electrode assembly and serves as a passage, enabling discharge of gas generated by internal reaction during charge and discharge, and operation.

In addition, a plate-shaped insulator 180a is mounted on the top of the electrode assembly 120, and is provided in the center thereof with an inlet 181a communicating with the through hole 151 of the center pin 150 so that gas is discharged and the cathode tap 142 of the electrode assembly 120 is connected to the cap plate 145 of the cap assembly 140.

However, the insulator 180a arranged on the top of the jelly-roll is a structure that blocks a passage through which an electrolyte solution permeates into a battery in the process of injecting an electrolyte solution into the battery. For this reason, the electrolyte solution permeates the battery only through the inlet 181a communicating with the center pin 150 and a region excluding the insulator 180a, thus disadvantageously requiring a long time for injection of electrolyte and consequently causing deterioration in production efficiency.

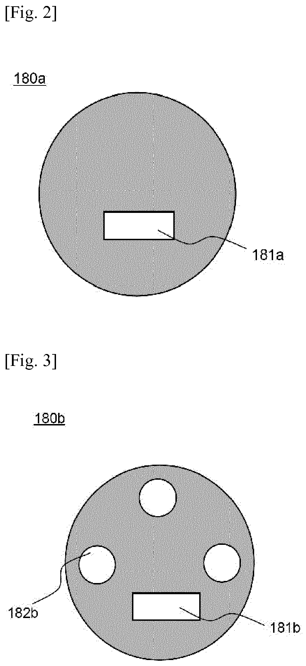

In order to improve permeability of the electrolyte solution, as shown in FIG. 3, a partial connection member 180b having a structure in which a plurality of through pores 182b are formed around an inlet 181b is suggested.

However, this structure is found to have serious problems in terms of safety. That is, conductive impurity particles such as metal powders generated in the process of manufacturing and/or assembling the cap assembly 140, the battery case 130 and the like are permeated into the electrode assembly 120 through the through pores 182b that are perforated in the insulator 180b, thus disadvantageously causing occurrence of short circuit or deterioration in battery lifespan.

Accordingly, there is an increasing need for secondary batteries that enhance injection processability of electrolyte solution and prevent incorporation of foreign materials in the process of assembling batteries, thereby improving lifespan.

### [Disclosure]

### [Technical Problem]

Therefore, the present invention has been made to solve the above and other technical problems that have yet to be resolved.

As a result of a variety of extensive and intensive studies and experiments to solve the problems as described above, the present inventors developed an insulator having a specific shape described below and discovered that the insulator prevents incorporation of foreign materials produced during an assembly process such as beading into the jelly-roll to prevent defects of batteries, improves safety and enhances injectability of electrolyte solution. The present invention has been completed, based on this discovery.

### [Technical Solution]

The present invention is a secondary battery according to claim 1 and a device comprising a secondary battery according to claim 1 as a power source. Accordingly, the secondary battery according to the present invention has no risk of incorporation of foreign materials having a size of 100 µm or higher into the jelly-roll during injection of electrolyte solution, thus omitting a process for screening and removing the foreign materials, thereby advantageously greatly improving productivity and is free of the risk of short circuit caused by incorporation of foreign material and improving safety.

In addition, since an electrolyte solution is injected through fine pores, injection passage is branched, injection time is reduced and, as a result, injectability is improved. The fine pores provide electric insulation as an inherent function of insulator, and have high permeability to an electrolyte solution during injection of electrolyte solution and a size of 1 µm to 100 µm in order to prevent permeation of foreign materials having a size of 100 µm or higher.

The position of fine pores and distance therebetween are limited so as not to impair prevention of incorporation of foreign materials, injectability of electrolyte solution and gas discharge. The fine pores are spaced from one another by a predetermined distance over the entire surface of the insulator in order to prevent incorporation of foreign materials having a size of 100 µm or higher, injectability of electrolyte solution and gas discharge. The distance means a distance between fine pores and the predetermined distance is 10 µm to 100 µm.

When an electrolyte solution is injected into the fine pores formed over the entire surface of the insulator, injection passages may be further branched, injectability is improved, injection time can be reduced, an injection speed is constant at a constant distance between fine pores, the electrolyte solution can be uniformly impregnated into the jelly-roll and, as a result, battery properties are thus advantageously improved.

In addition, the fine pores spaced from one another by a predetermined distant over the entire surface of the insulator provide passages, enabling gas discharge. Taking consideration into diffusion of gas, discharge speed may be increased when the gas is discharged through the branched discharge passages. The fine pores may be in the form of a through hole having a uniform diameter in a longitudinal direction, or a communicating hole having a non-uniform diameter in a longitudinal direction. The through hole and communicating hole shapes relate to passages of electrolyte solution and gas in the insulator.

Specifically, the through hole shape having a uniform diameter forms two-dimensional passages, while the communicating hole shape having a non-uniform diameter forms three-dimensional passages. In terms of uniform injection of electrolyte solution and diffusion of gas, the fine pores preferably have a communicating hole shape having a non-uniform diameter in a longitudinal direction.

Any material may be used for the insulator without particular limitation so long as it has insulating properties, the insulator may be composed of an electrical-insulating polymer resin or an electrical-insulating polymer composite and, specifically, the polymer resin may be one or more selected from the group consisting of polyethylene (PE), polypropylene (PP), polybutylene (PB), polystyrene (PS), polyethylene terephthalate (PET), natural rubbers and synthetic rubbers.

The insulator according to the present invention may have a variety of shapes.

In a preferred embodiment, the insulator may comprise a material molded with a polymer resin or polymer composite and may have a structure in which fine pores perforate through the molded material (plate-typed body). At this time, the fine pores may have a through hole shape that has a uniform diameter in a longitudinal direction.

In another preferred embodiment, the insulator may comprise a porous woven or non-woven fabric that enables an electrolyte solution to be readily permeated due to inherent properties of the material or shape properties of sheets. At this time, the insulator may have a communicating hole shape having a non-uniform diameter in a longitudinal direction. However, in the porous woven fabric structure, fine pores may form through holes that have a uniform diameter in a longitudinal direction.

Generally, during production of cylindrical secondary batteries, the insulator is cut into the shape and size, allowing a predetermined pressing sheet to be inserted into a cylindrical battery case, and the insulator sheet having a woven or non-woven fabric structure is free of a bending phenomenon resulting from the pressing sheet, thus advantageously improving productivity. In view of this point, an insulator having a woven or non-woven fabric structure is more preferred.

Specifically, the insulator may comprise a woven-fabric in which long fibers made of a polymer resin or composite form fine pores.

Also, the insulator may comprise a non-woven fabric in which short fibers made of a polymer resin or composite form fine pores, and the non-woven fabric shape may be formed by partially bonding the short fibers through needle punching or thermal fusion, or using an adhesive agent.

In a specific embodiment, the insulator comprises a non-woven fabric made of short fibers, parts bonded by thermal fusion are disposed by a predetermined distance over the entire surface of the insulator, and protrusions having a barrier shape that are not thermally fused to improve mechanical strength of the insulator are disposed between the bonded parts.

The insulator preferably has a thickness of 0.1 mm to 0.5 mm. When the thickness of the insulator is excessively small, the insulator cannot sufficiently exert inherent insulating property, and on the other hand, when the thickness is excessively large, a decrease in size of jelly-roll is induced in a battery case having a constant size and battery capacity is disadvantageously reduced.

Preferably, the secondary battery according to the present invention may be applied to a lithium secondary battery fabricated by impregnating a lithium-containing electrolyte solution in the jelly-roll.

In general, a lithium secondary battery comprises a cathode, an anode, a separator, a lithium-containing aqueous electrolyte solution and the like.

For example, the cathode is produced by applying a slurry prepared by mixing a cathode mixture containing a cathode active material and optionally containing a conductive material, a binder, a filler and the like with a solvent such as NMP to a cathode current collector, followed by drying and rolling.

Examples of the cathode active material include, but are not limited to, layered compounds such as lithium cobalt oxide (LiCoO₂) or lithium nickel oxide (LiNiO₂) or compounds substituted with one or more transition metals; lithium manganese oxides such as Li_{1+y}Mn_{2-y}O₄ (in which y is 0 to 0.33), LiMnO₃ and LiMn₂O₃, and LiMnO₂; lithium copper oxides (Li₂CuO₂); vanadium oxides such as LiV₃O₈, LiFe₃O₄, V₂O₅, and Cu₂V₂O₇; Ni site-type lithium nickel oxides represented by formula of LiNi_{1-y}M_{y}O₂ (in which M = Co, Mn, Al, Cu, Fe, Mg, B or Ga, y = 0.01 to 0.3); lithium manganese composite oxides represented by formula of LiMn_{2-y}M_{y}O₂ (in which M = Co, Ni, Fe, Cr, Zn or Ta, y = 0.01 to 0.1) or Li₂Mn₃MO₈ (in which, M = Fe, Co, Ni, Cu or Zn); LiMn₂O₄ in which a part of Li is substituted by an alkaline earth metal ion; disulfide compounds; Fe₂(MoO₄)₃ and the like.

The cathode current collector is generally manufactured to have a thickness of 3 to 500 µm. Any cathode current collector may be used without particular limitation so long as it has suitable conductivity without causing adverse chemical changes in the manufactured battery. Examples of the cathode current collector include stainless steel, aluminum, nickel, titanium, sintered carbon, and aluminum or stainless steel surface-treated with carbon, nickel, titanium or silver. These current collectors include fine irregularities on the surface thereof so as to enhance adhesion to electrode active materials. In addition, the current collectors may be used in various forms including films, sheets, foils, nets, porous structures, foams and non-woven fabrics.

The conductive material is commonly added in an amount of 1 to 30% by weight, based on the total weight of the mixture comprising the cathode active material. Any conductive material may be used without particular limitation so long as it has suitable conductivity without causing adverse chemical changes in the battery. Examples of conductive materials include conductive materials, including graphite; carbon blacks such as carbon black, acetylene black, Ketjen black, channel black, furnace black, lamp black and thermal black; conductive fibers such as carbon fibers and metallic fibers; metallic powders such as carbon fluoride powders, aluminum powders and nickel powders; conductive whiskers such as zinc oxide and potassium titanate; conductive metal oxides such as titanium oxide; and polyphenylene derivatives.

The binder is a component which enhances binding of an electrode active material to a conductive material and current collector. The binder is commonly added in an amount of 1 to 30% by weight, based on the total weight of the mixture comprising the cathode active material. Examples of the binder include polyvinylidene, polyvinyl alcohol, carboxymethylcellulose (CMC), starch, hydroxypropylcellulose, regenerated cellulose, polyvinyl pyrollidone, tetrafluoroethylene, polyethylene, polypropylene, ethylene propylene diene terpolymer (EPDM), sulfonated EPDM, styrene butadiene rubbers, fluororubbers and various copolymers.

The filler is a component optionally used to inhibit expansion of the electrode. Any filler may be used without particular limitation so long as it does not cause adverse chemical changes in the manufactured battery and is a fibrous material. Examples of the filler include olefin polymers such as polyethylene and polypropylene; and fibrous materials such as glass fibers and carbon fibers.

The separator is interposed between the cathode and the anode. As the separator, an insulating thin film having high ion permeability and mechanical strength is used. The separator typically has a pore diameter of 0.01 to 10 µm and a thickness of 5 to 300 µm. As the separator, sheets or non-woven fabrics made of an olefin polymer such as polypropylene and/or glass fibers or polyethylene, which have chemical resistance and hydrophobicity, are used. When a solid electrolyte such as a polymer is employed as the electrolyte, the solid electrolyte may also serve as both the separator and electrolyte.

For example, the anode is produced by applying a slurry prepared by mixing an anode mixture containing an anode active material with a solvent such as NMP to an anode current collector, followed by drying and rolling. The anode mixture may further optionally contain the components described above.

Examples of the anode active material include carbon such as hard carbon, graphite-based carbon; metal composite oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group I, II and III elements, halogen; 0≤x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials and the like.

The anode current collector is generally fabricated to have a thickness of 3 to 500 µm. Any anode current collector may be used without particular limitation so long as it has suitable conductivity without causing adverse chemical changes in the manufactured battery. Examples of the anode current collector include copper, stainless steel, aluminum, nickel, titanium, sintered carbon, and copper or stainless steel surface-treated with carbon, nickel, titanium or silver, and aluminum-cadmium alloys. Similar to the cathode current collectors, the current collectors include fine irregularities on the surface thereof so as to enhance adhesion to electrode active materials. In addition, the current collectors may be used in various forms including films, sheets, foils, nets, porous structures, foams and non-woven fabrics.

Meanwhile, the electrolyte is composed of a non-aqueous electrolyte and a lithium salt. Examples of preferred electrolytes include non-aqueous organic solvents, organic solid electrolytes, inorganic solid electrolytes and the like.

Examples of the non-aqueous solvent include non-protic organic solvents such as N-methyl-2-pyrollidinone, propylene carbonate, ethylene carbonate, butylene carbonate, dimethyl carbonate, diethyl carbonate, gamma-butyrolactone, 1,2-dimethoxy ethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

Examples of the inorganic solid electrolyte include nitrides, halides and sulfates of lithium such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH and Li₃PO₄-Li₂S-SiS₂.

The lithium salt is a material that is readily soluble in the above-mentioned non-aqueous electrolyte and examples thereof include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate and imides.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further include halogen-containing solvents such as carbon tetrachloride and ethylene trifluoride. Further, in order to improve high-temperature storage characteristics, the non-aqueous electrolyte may additionally contain carbon dioxide gas, fluoro-ethylene carbonate (FEC), propene sultone (PRS) or fluoro-ethylene carbonate (FEC).

The present invention provides a device comprising the secondary battery as a power source and the device according to the present invention may be preferably used for mobile devices such as cellular phones and portable computers as well as electric vehicles (EVs), hybrid electric vehicles (HEVs), plug-in hybrid electric vehicles and power-storing devices in terms of superior lifespan and safety.

The structures and production methods of the lithium secondary battery, and medium and large battery modules and devices including the lithium secondary battery as unit batteries are well-known in the art and a detailed description thereof is omitted.

### [Effects of Invention]

As apparent from the fore-going, the secondary battery according to the present invention can advantageously omit a process for screening and removing foreign materials, in some cases, a process for preventing or removing a bending phenomenon, can cut the insulator into a predetermined size, can branch an injection passage of electrolyte solution and can greatly improve productivity.

In addition, the secondary battery according to the present invention has no risk of short circuit resulting from incorporation of foreign materials and improves gas exhaust, thus consequently enhancing safety.

Also, the secondary battery according to the present invention improves rate characteristics since a jelly-roll is evenly impregnated in an electrolyte solution.

Also, the secondary battery according to the present invention comprises an insulator that exhibits improved mechanical properties due to protrusions having a non-thermally fused barrier shape.

### [Brief description of the drawings]

The above and other objects, features and other advantages of the present invention will be more clearly understood from the following detailed description taken in conjunction with the accompanying drawings, in which:

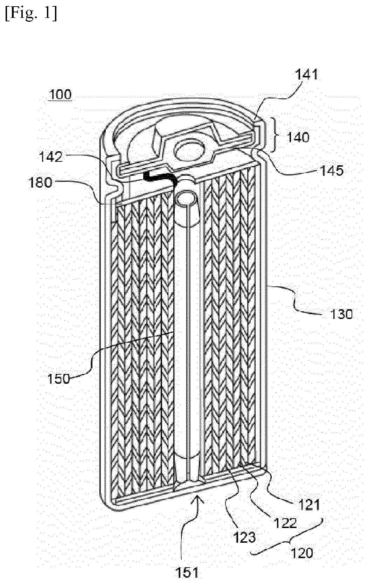

FIG. 1 is a representative sectional schematic view illustrating a cylindrical secondary battery;
FIG. 2 is a plan view illustrating an insulator used for the secondary battery of FIG. 1 according to one embodiment;
FIG. 3 a plan view illustrating an insulator used for the secondary battery of FIG. 1 according to another embodiment; and

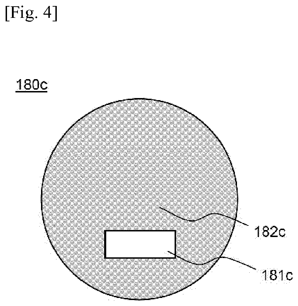

FIG. 4 is a plan view illustrating an insulator according to one embodiment of the present invention.

### [Best mode]

Now, the present invention will be described in more detail with reference to the following examples. These examples are provided only for illustrating the present invention and should not be construed as limiting the scope and spirit of the present invention.

FIG. 4 is a plan view schematically illustrating an insulator according to one embodiment of the present invention.

Referring to FIGS. 4 and 1, a secondary battery 100 has a structure in which a jelly-roll 120 having a structure of cathode 121/ separator 123/anode 122 is mounted in a cylindrical battery case 130, wherein an insulator 180 is mounted on the top of the jelly-roll 120.

The insulator 180c is composed of polyethylene terephthalate (PET) with a thickness of about 0.4 mm, is provided at one side thereof with an inlet 181c and is provided over the entire surface thereof with a plurality of fine pores 182c having a diameter of 10 to 30 µm that are spaced from one another by a predetermined distance.

Accordingly, through the plurality of fine pores 182c, an electrolyte solution permeates into the entire surface of the insulator 180c when injected, thus causing considerable improvement in injectability and preventing occurrence of short circuit.

Now, the present invention will be described in more detail with reference to the following examples. These examples are provided only for illustrating the present invention and should not be construed as limiting the scope of the present invention.

### [Example 1]

An insulator having a thickness of 0.4 mm in which a rectangular inlet having a width of 6 mm and a length of 2.5 mm was perforated at one side thereof and a plurality of fine pores having a diameter of 1 to 30 µm were uniformly distributed by a predetermined distance of about 10 to about 30 µm was manufactured using a polypropylene phthalate (PET) sheet, as shown in FIG. 4. Then, the insulator was mounted on the top of a jelly-roll in which a cathode/separator/anode is rolled based on a center pin and a cylindrical secondary battery with a 18650 standard (diameter 18 mm, length 65 mm) was manufactured in a state that fine metal powders generated in the process of battery assembly were arranged on the insulator.

### Example 2, not forming part of the present invention

An insulator and a secondary battery were manufactured in the same manner as in Example 1 except that a plurality of fine pores having a diameter of 100 µm were uniformly distributed by a predetermined distance of about 120 µm over the entire surface of the insulator.

### [Example 3]

An insulator and a secondary battery were manufactured in the same manner as in Example 1 except that a polypropylene (PP) sheet was used as a material for the insulator, instead of the polyethylene terephthalate (PET) sheet.

### [Example 4]

An insulator having a grooved embossing pattern structure was produced using a polyethylene terephthalate (PET) woven fabric that formed fine pores of 15 µm as a material for the insulator. An insulator and a secondary battery were manufactured in the same manner as in Example 1 except that the material for the insulator was used.

### [Example 5]

An insulator having a grooved embossing pattern structure was produced using a polyethylene terephthalate (PET) woven fabric that formed fine pores of 15 µm in average as a material for the insulator. An insulator and a secondary battery were manufactured in the same manner as in Example 1 except that the material for the insulator was used.

### [Comparative Example 1]

An insulator and a secondary battery were manufactured in the same manner as in Example 1 except that a plurality of pores was not included, as shown in FIG. 2.

### [Comparative Example 2]

An insulator and a secondary battery were manufactured in the same manner as in Example 1 except that three through pores with a diameter of 2.5 mm were formed, as shown in FIG. 3.

### [Comparative Example 3]

An insulator and secondary battery were manufactured in the same manner as in Example 1 except that a plurality of fine pores having a diameter of 150 µm were uniformly distributed by a predetermined distance of about 120 µm over the entire surface of the insulator.

### [Comparative Example 4]

An insulator and a secondary battery were manufactured in the same manner as in Comparative Example 1 except that a polypropylene (PP) sheet was used as a material for the insulator, instead of the polyethylene terephthalate (PET) sheet.

### [Comparative Example 5]

An insulator and a secondary battery were manufactured in the same manner as in Example 1 except that a polyethylene terephthalate (PET) woven fabric that did not form fine pores was used as a material for the insulator.

### [Test Example 1]

The secondary batteries manufactured in Examples 1 to 5 and Comparative Examples 1 to 5 were subjected to electrolyte solution impregnation testing. The results are shown in Table 1 below. The electrolyte solution impregnation testing was carried out by injecting a 1M LiPF₆ carbonate electrolyte solution into the manufactured cylindrical battery case, measuring a time taken until impregnation ratio of the jelly-roll reached 100%, repeating this process four times and calculating an average of the four values.

In addition, a cap assembly was welded to the open top of the manufactured secondary battery to produce 10 samples. The samples were subjected to charge and discharge testing and short circuit was confirmed. The results are shown in Table 1 below.

**[Table 1]**

| | Impregnation time (sec) | Time shortage ratio (%) (based on Comp. Ex. 1) | Number of short-circuited batteries (n) | Short circuit ratio (%) |
|---|---|---|---|---|
| Ex. 1 | 304 | 56 | 0 | 0 |
| Ex. 2 | 311 | 55 | 0 | 0 |
| Ex. 3 | 306 | 56 | 0 | 0 |
| Ex.4 | 383 | 45 | 0 | 0 |
| Ex. 5 | 305 | 56 | 0 | 0 |
| Comp. Ex. 1 | 698 | 0 | 2 | 20 |
| Comp. Ex. 2 | 538 | 23 | 4 | 40 |
| Comp. Ex. 3 | 301 | 57 | 1 | 10 |
| Comp. Ex. 4 | 692 | 1 | 2 | 20 |
| Comp. Ex. 5 | 605 | 13 | 0 | 0 |

As can be seen from Table 1, the batteries of Examples 1 and 3 to 5 according to the present invention had considerably shortened electrolyte solution impregnation time, as compared to Comparative Examples 1 to 4. That is, it can be seen that the electrolyte solution was efficiently permeated through a plurality of fine pores provided in the insulator.

The battery of Comparative Example 2 exhibited improved impregnation, but increased short circuit, as compared to the battery of Comparative Example 1, the battery of Comparative Example 3 also exhibited impregnation comparable to Example 1, but exhibited higher short circuit rate. The reason for this was that metal powders were permeated into relatively large pores, causing short circuit in the jelly-roll.

Also, it was seen that Comparative Example 5 could slightly reduce an impregnation time, as compared to Comparative Example 1, since an insulator made of a woven fabric was used. Comparing with Example 4 in which an insulator having a plurality of fine pores was used, Comparative Example 5 exhibited the same short circuit and great difference in impregnation time.

On the other hand, the battery of Comparative Example 1 exhibited high short circuit rates as compared to the batteries of Example 1, although fine pores were not perforated on the insulator on which the battery of Comparative Example 1 was mounted, as shown in Example 1. The reason for the high short circuit rate was believed to be due to the fact that, in the batteries of Example 1, movement of metal powders was suppressed when metal powders were entrapped in the fine pores, but, in the battery of Comparative Example 1, metal powders were freely moved on the smooth surface of the insulator and moved to the jelly-roll through the circumference of the inlet or insulator.

The battery of Example 3 had substantially the same impregnation and short circuit as that of Example 1, since it was different from that of Example 1 in terms of only material for a sheet.

Also, it was seen that batteries of Example 4 and Example 5 using coarse woven and non-woven fabrics could considerably reduce an impregnation time, as compared to batteries of Comparative Examples 1, 4 or 5, because of the fine pores that were formed in the fabric structure without separately forming fine pores.

Meanwhile, the battery of Comparative Example 5 used a woven fabric that did not form fine pores, thereby exhibiting slightly improved impregnation time, as compared to Comparative Example 1 using a PET sheet, but exhibiting deterioration in impregnation performance as compared to Examples.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A secondary battery having a structure in which a jelly-roll having a cathode/separator/anode structure is mounted in a cylindrical battery case,
wherein a plate-shaped insulator mounted on the top of the jelly-roll includes:
a perforated inlet enabling gas discharge and penetration of electrode terminals; and
a plurality of fine pores having a size of 1 µm to 100 µm and being dispersed from one another by a predetermined distance ranging from 10 µm to 100 µm over the entire surface of said plate-shaped insulator.

2. The secondary battery according to claim 1, wherein the fine pores are in the form of a through hole that has a uniform diameter in a longitudinal direction.

3. The secondary battery according to claim 1, wherein the fine pores are in the form of a communicating hole having a non-uniform diameter in a longitudinal direction.

4. The secondary battery according to claim 1, wherein the insulator is composed of an electrical-insulating polymer resin or an electrical-insulating polymer composite.

5. The secondary battery according to claim 4, wherein the polymer resin is one or more selected from the group consisting of polyethylene, polypropylene, polybutylene, polystyrene, polyethylene terephthalate, natural rubbers and synthetic rubbers.

6. The secondary battery according to claim 1, wherein the insulator comprises a material molded with a polymer resin or composite and has a structure in which fine pores perforate through the molded material.

7. The secondary battery according to claim 1, wherein the insulator comprises a woven fabric in which long fibers made of a polymer resin or composite form fine pores.

8. The secondary battery according to claim 1, wherein the insulator comprises a non-woven fabric in which short fibers made of a polymer resin or composite form fine pores.

9. The secondary battery according to claim 8, wherein the short fibers are partially bonded through needle punching or thermal fusion, or using an adhesive agent to form a non-woven fabric.

10. The secondary battery according to claim 1, wherein the insulator comprises a non-woven fabric made of short fibers, parts bonded by thermal fusion are disposed by a predetermined distance over the entire surface of the insulator, and protrusions having a barrier shape that are not thermally fused are disposed between the bonded parts.

11. The secondary battery according to claim 1, wherein the insulator has a thickness of 0.1 mm to 0.5 mm.

12. The secondary battery according to claim 1, wherein the battery is a lithium secondary battery.

13. A device comprising the secondary battery according to any one of claims 1 to 12 as a power source.

14. The device according to claim 13, wherein the device is selected from a cellular phone, a portable computer, an electric vehicle, a hybrid electric vehicle, a plug-in hybrid electric vehicle and a device for power storage

## Patentansprüche

1. Sekundärbatterie, welche eine Struktur aufweist, in welcher eine Jelly-Roll/gewickelte Rolle, welche eine Katode/Separator/Anode-Struktur aufweist, in einem zylindrischen Batteriegehäuse montiert ist,
wobei ein plattenförmiger Isolator, welcher oben auf der Jelly-Roll/gewickelten Rolle montiert ist, umfasst:
einen perforierten Einlass, welcher eine Gasabführung und eine Penetration von Elektrodenanschlüssen erlaubt; und
eine Mehrzahl von feinen Poren, welche eine Größe von 1 µm bis 100 µm aufweisen und über die gesamte Fläche des plattenförmigen Isolators durch eine vorbestimmte Distanz, welche von 10 µm bis 100 µm reicht, voneinander getrennt/ verteilt sind.

2. Sekundärbatterie nach Anspruch 1, wobei die feinen Poren in der Form einer Durchgangsöffnung vorliegen, welche einen einheitlichen Durchmesser in einer longitudinalen Richtung aufweist.

3. Sekundärbatterie nach Anspruch 1, wobei die feinen Poren in der Form einer kommunizierenden Öffnung vorliegen, welche einen nicht-einheitlichen Durchmesser in einer longitudinalen Richtung aufweist.

4. Sekundärbatterie nach Anspruch 1, wobei der Isolator aus einem elektrisch-isolierenden Polymerharz/-kunststoff oder einem elektrisch-isolierenden Polymerverbundstoff besteht.

5. Sekundärbatterie nach Anspruch 4, wobei das Polymerharz/der Polymerkunststoff einer oder mehrere ist, ausgewählt aus der Gruppe bestehend aus: Polyethylen, Polypropylen, Polybutylen, Polystyrol, Polyethylenterephthalat, Naturkautschuken und synthetischen Kautschuken.

6. Sekundärbatterie nach Anspruch 1, wobei der Isolator ein Material umfasst, welches mit einem Polymerharz/-kunststoff oder einem Verbundstoff geformt ist und eine Struktur aufweist, in welcher feine Poren durch das geformte Material perforieren.

7. Sekundärbatterie nach Anspruch 1, wobei der Isolator ein gewebtes Material umfasst, in welchem lange Fasern, welche aus einem Polymerharz/-kunststoff oder einem Verbundstoff hergestellt sind, feine Poren ausbilden.

8. Sekundärbatterie nach Anspruch 1, wobei der Isolator einen nicht gewebten Stoff umfasst, in welchem kurze Fasern, welche aus einem Polymerharz/-kunststoff oder einem Verbundstoff hergestellt sind, feine Poren ausbilden.

9. Sekundärbatterie nach Anspruch 8, wobei die kurzen Fasern durch Vernadelung oder thermale Verschmelzung oder unter Verwendung eines Adhäsivmittels partiell gebunden sind, um einen nicht gewebten Stoff auszubilden.

10. Sekundärbatterie nach Anspruch 1, wobei der Isolator einen aus kurzen Fasern hergestellten nicht gewebten Stoff umfasst, wobei dessen durch thermale Verschmelzung gebundene Teile über eine vorbestimmte Distanz über die gesamte Fläche des Isolators angeordnet sind und Vorsprünge, welche eine Barriereform aufweisen, welche nicht thermal verschmolzen sind, sind zwischen den gebundenen Teilen angeordnet.

11. Sekundärbatterie nach Anspruch 1, wobei der Isolator eine Dicke von 0,1 mm bis 0,5 mm aufweist.

12. Sekundärbatterie nach Anspruch 1, wobei die Batterie eine Lithiumsekundärbatterie ist.

13. Vorrichtung, umfassend die Sekundärbatterie nach einem beliebigen der Ansprüche 1 bis 12 als eine Leistungsquelle.

14. Vorrichtung nach Anspruch 13, wobei die Vorrichtung ausgewählt ist aus einem Mobiltelefon, einem tragbaren Computer, einem Elektrofahrzeug, einem Hybrid-Elektrofahrzeug, einem Plug-In-Hybrid-Elektrofahrzeug und einer Vorrichtung zur Leistungsspeicherung.

## Revendications

1. Batterie secondaire ayant une structure dans laquelle un roulé ayant une structure de type cathode-séparateur-anode est monté dans un boîtier de batterie cylindrique, dans laquelle un isolant en forme de plaque monté sur le dessus du roulé comprend :
une entrée perforée permettant l'évacuation de gaz et la pénétration de bornes d'électrodes ; et
une pluralité de pores fins ayant une taille de 1 µm à 100 µm et étant séparés les uns des autres par une distance prédéterminée allant de 10 µm à 100 µm et dispersés sur toute la surface dudit isolant en forme de plaque.

2. Batterie secondaire selon la revendication 1, dans laquelle les pores fins se présentent sous la forme d'un trou traversant qui a un diamètre uniforme dans une direction longitudinale.

3. Batterie secondaire selon la revendication 1, dans laquelle les pores fins se présentent sous la forme d'un trou communiquant ayant un diamètre non uniforme dans une direction longitudinale.

4. Batterie secondaire selon la revendication 1, dans laquelle l'isolant est composé d'une résine polymère électro-isolante ou d'un composite polymère électro-isolant.

5. Batterie secondaire selon la revendication 4, dans laquelle la résine polymère est une ou plusieurs résines choisies dans le groupe constitué du polyéthylène, du polypropylène, du polybutylène, du polystyrène, du polyéthylène téréphtalate, des caoutchoucs naturels et des caoutchoucs synthétiques.

6. Batterie secondaire selon la revendication 1, dans laquelle l'isolant comprend un matériau moulé avec une résine ou un composite polymère et a une structure dans laquelle des pores fins sont percés dans le matériau moulé.

7. Batterie secondaire selon la revendication 1, dans laquelle l'isolant comprend un tissu tissé dans lequel de longues fibres faites d'une résine ou d'un composite polymère forment des pores fins.

8. Batterie secondaire selon la revendication 1, dans laquelle l'isolant comprend un tissu non tissé dans lequel de courtes fibres faites d'une résine ou d'un composite polymère forment des pores fins.

9. Batterie secondaire selon la revendication 8, dans laquelle les fibres courtes sont partiellement liées par aiguilletage ou fusion thermique, ou à l'aide d'un agent adhésif pour former un tissu non tissé.

10. Batterie secondaire selon la revendication 1, dans laquelle l'isolant comprend un tissu non tissé fait de fibres courtes, les parties liées par fusion thermique sont placées à une distance prédéterminée les unes des autres sur toute la surface de l'isolant, et des saillies ayant une forme de barrière qui ne sont pas soudées par fusion thermique sont placées entre les parties liées.

11. Batterie secondaire selon la revendication 1, dans laquelle l'isolant a une épaisseur de 0,1 mm à 0,5 mm.

12. Batterie secondaire selon la revendication 1, dans laquelle la batterie est une batterie secondaire au lithium.

13. Dispositif comprenant la batterie secondaire selon l'une quelconque des revendications 1 à 12 comme source d'alimentation.

14. Dispositif selon la revendication 13, dans lequel le dispositif est choisi parmi un téléphone mobile, un ordinateur portable, un véhicule électrique, un véhicule électrique hybride, un véhicule électrique hybride rechargeable et un dispositif de stockage d'énergie.
